# EUROPEAN PATENT APPLICATION

(11) **EP 4 794 262 A1**
(43) Date of publication of application: **19.08.2026**
(21) Application number: 25158201.1
(22) Date of filing: 17.02.2025
(51) Int. Cl.: H04L 9/32

(54) **METHOD AND SYSTEM FOR AUTHENTICATION OF A DEVICE CONTAINING A PHYSICALLY UNCLONABLE FUNCTION**

(71) Applicant: Technische Universität München, 80333 München (DE)
(72) Inventor: STEIN, Niklas, 81539 München (DE); PEHL, Michael, 80689 München (DE)
(74) Representative: K & H Bonapat Patentanwälte Koch · von Behren & Partner mbB

(57) **Abstract**

The invention relates to a computer implemented method for authentication of a prover device (P) containing a Physically Unclonable Function (PUF). The method comprises the steps: a) determining (51) enrollment data of a model (M) containing reliability information for individual PUF responses by reading out a specific response of the PUF of the prover device (P), e.g. by repeatedly measuring a specific PUF response under different operation conditions, until a predetermined accuracy of the reliability information is reached, and storing the enrollment data and the model (M) containing reliability information for individual PUF responses of the prover device (P) known to a verifier device (V) in a database unit (DB) of the verifier device (V), b) the verifier device (V) generates a number (N1) that can be used just once and sends (S3) it to the prover device (P), c) the prover device (P) applies (S4) a Cryptographic Hash Function (HF) to a conjunction (C) of a fuzzy secret output (SO) of the PUF and at least the number (N1) that can be used just once and sends (55) at least a part of an output (HFO) of the Cryptographic Hash Function (HF) to the verifier device (V), and d) the verifier device (V) determines (S7) a symbol-specific likelihood from the model (M) containing reliability information for individual PUF responses to derive a number of hypotheses (H1, H2, H3) for the secret output, wherein the hypotheses (H1, H2, H3) have different likelihoods and the number depends on a noise level of the PUF, a predetermined false rejection rate and/or a length of the secret output (SO), and the verifier device (V) applies the Cryptographic Hash Function (HF) to the conjunction (C) of every hypothesis (H1; H2; H3) for the secret output of the number of hypotheses (H1, H2, H3) and at least the number (N1) that can be used just once until at least a part of an output of the Cryptographic Hash Function (HF) of the verifier device (V) matches (S9) at least the part of the output (HFO) of the Cryptographic Hash Function (HF) received from the prover device (P) for a successful authentication. Other aspects of the invention are a computer program product which causes the computer to execute the method and a system for authentication of a prover device (P) containing a Physically Unclonable Function (PUF).

## Description

The invention relates to a method and system for authentication of a prover device containing a Physically Unclonable Function.

Security mechanisms for small devices such as radio-frequency identification (RFID) tags or Internet of Things (IoT) devices differ from the classical cryptography. The devices have high constrains on production costs, so a Physical Unclonable Function (PUF) might be used instead of a non-volatile key storage memory, for key-agreement between e.g. a server, also called verifier device, and the small device, also called prover device, and instead of classical crypto algorithms to authenticate the device. The PUF is a measurement circuit for minuscule, otherwise unobservable process variations and as such outputs a secret which is fuzzy, since the measurement results differ by a few percent every time the function is read. Consequently, the use as a key in conventional cryptographic algorithms is not possible without error correction. Existing authentication methods/protocols use either error correction on the device to derive a constant key or transmit PUF response strings and compare the similarity of the responses with previously stored references in a database. Both techniques have significant shortcomings: Error correction causes hardware overhead on the lightweight prover device and, thus, cost; helper data used for error correction may have some information leakage. Both, error correction and transmission of plain PUF data leak information about the PUF primitive, which enables modeling attacks on the PUF. Due to the nature of Machine-Learning, it is hard to provide a lower bound for the achievable security level achievable with such methods.

It is therefore an object of the present invention to provide a computer implemented method and system for authentication of a prover device containing a Physically Unclonable Function that avoids the disadvantages of the prior art. It is also an object to provide the method and system such that the authentication is secure with a PUF removing the problem of modeling attacks while requiring a smaller area consumption and thus production cost and providing provable resistance against various types of attacks like Machine Learning.

The object is solved by the method of claim 1, the computer program product of claim 13, and the system of claim 15. Further developments and advantageous embodiments are defined in the dependent claims.

The computer implemented method for authentication of a prover device containing a Physically Unclonable Function comprises the steps:
a) determining enrollment data of a model containing reliability information for individual PUF responses by reading out a specific response of the PUF of the prover device, e.g. by repeatedly measuring a specific PUF response under different operation conditions, until a predetermined accuracy of the reliability information is reached, and storing the enrollment data and the model, which contains reliability information for individual PUF responses, of the prover device known to a verifier device in a database unit of the verifier device,
b) the verifier device generates a number that can be used just once (nonce) and sends it to the prover device,
c) the prover device applies a Cryptographic Hash Function to a conjunction of a fuzzy secret output of the PUF and at least the number that can be used just once and sends at least a part of an output of the Cryptographic Hash Function to the verifier device, and
d) the verifier device determines a symbol-specific likelihood from the model containing reliability information for individual PUF responses to derive a number of hypotheses for the secret output, wherein the hypotheses have different likelihoods and the number depends on a noise level of the PUF, a predetermined, e.g. required, false rejection rate and/or a length of the secret output, and the verifier device applies the Cryptographic Hash Function to the conjunction of every hypothesis for the secret output of the number of hypotheses and at least the number that can be used just once until at least a part of an output of the Cryptographic Hash Function of the verifier device matches at least the part of the output of the Cryptographic Hash Function received from the prover device for a successful authentication.

The hypotheses may be sorted by their likelihood, e.g. in increasing or descending order. When the verifier device has applied the Cryptographic Hash Function to the conjunction of every hypothesis for the secret output of the number of hypotheses and at least the number that can be used just once without at least a part of an output of the Cryptographic Hash Function of the verifier device matching at least the part of the output of the Cryptographic Hash Function received from the prover device for a successful authentication, the authentication of the prover device is not successful, i.e. failed. The matching of at least the part of the output of the Cryptographic Hash Function of the verifier device with at least the part of the output of the Cryptographic Hash Function received from the prover device may be executed by the verifier device.

The prover device may send before method step b) an identification code (ID) to the verifier device, wherein the verifier device may select the enrollment data of the prover device in the database unit. Alternatively, the verifier device may publish its identification, e.g. its IP address, and request a response from any prover device which received the request and wants to respond to the verifier device.

The part of an output of the Cryptographic Hash Function applied by the prover device may be taken in variable length from an end section, a middle section and/or an initial section of a hash value representing the output of the Cryptographic Hash Function. A length of the part of the output of the Cryptographic Hash Function may be chosen depending on the degree of security of the authentication and/or available processing power in the verifier device. In the following, when referring to the output of the Cryptographic Hash Function, a part of the output of the Cryptographic Hash Function is meant to be included.

In method step c), the prover device may send the entire output of the Cryptographic Hash Function to the verifier device, wherein in method step d) the verifier device may apply the Cryptographic Hash Function to the conjunction of every hypothesis for the secret output of the number of hypotheses and at least the number that can be used just once until the entire output of the Cryptographic Hash Function of the verifier device matches the entire output of the Cryptographic Hash Function received from the prover device for a successful authentication. Thus, a high degree of security of the authentication can be provided.

The prover device may be equipped with a Physical Unclonable Function without challenge-response behavior such as but not limited to Ring-Oscillator PUFs or SRAM PUFs. PUF devices without challenge-response may be known as Physically Obfuscated Key (POK) devices. The prover device may alternatively be equipped with a Physical Unclonable Function with challenge-response behavior such as but not limited to Ring-Oscillator-SUM-PUFs, Loop PUFs, or Arbiter PUFs. PUFs with challenge-response behavior are also known as Strong PUFs, if they have a large challenge-response space. These PUFs are known to receive a challenge, that defines a configuration of the PUF for manufacturing variation measurement, and provide a corresponding response.

The prover device may be a client and the verifier device may be a server, wherein the server may be configured as a distributed computer system such as but not limited to a cloud computing system.

The Cryptographic Hash Function applied in method steps c) and d) may not be reversible with a lower complexity than brute-force even in case the relation between inputs is known and may offer enough diffusion that no statistical assumption of the input can be made. Examples for Cryptographic Hash Functions that may be applied in method steps c) and d) include but are not limited to NIST SHA-3, or the more lightweight NIST-finalist ASCON-XOF.

The method for authentication comprising steps a) to d) solves the problem of machine-learnability by applying a cryptographic hash-function directly to the output of the PUF. This is in contrast to the state of the art, since the noisiness of the PUF response requires either error correction on the prover device containing the PUF, which shall usually be lightweight and cheap, or makes a matching with the correct PUF response for authentication - due the properties of the cryptographic hash - impossible when the method for authentication comprising steps a) to d) is not applied.

To overcome the noise problem associated with the PUF response, the inventive method uses a reliability model of the PUF on the verifier device, which makes enumeration of candidate responses possible and allows for authentication with low false-positive and false-negative rates. The reliability model is a model describing the statistical uncertainty inherent to the measurement of the physical property used to generate a PUF response, which may be in the simplest case a normal distribution of the observed property or a more complex distribution from, e.g., a semiconductor model. It can be a mathematical description or a model trained to describing the impact of noise and environmental conditions on the PUF. It provides the probability that a symbol derived as PUF response deviates from its expectation. The number of candidate responses, i.e. the number of hypotheses for the secret output, may depend on the noise level of the PUF, a predetermined, e.g. prover device dependent required, false rejection rate and/or a length of the secret response. A symbol is a quantized response derived from a PUF. Examples are 0/1 for the binary case, values 0...7 of octal numbers or 0...FF for hexadecimal numbers.

With the inventive method using a number that can be used just once, abbreviated "nonce", the method is applicable not only to PUFs with challenge-response behavior, but also to PUFs without challenge-response behavior, which are known to not being used in the art for challenge-response authentication without additional error correction.

It is advantageous, when after method step b) and before method step c) the prover device generates a random number and sends the random number to the verifier device in method step c1), wherein in method steps c) and d) the Cryptographic Hash Function is applied to the conjunction comprising the number that can be used just once and the random number. The prover device may not contain sufficient non-volatile memory and may therefore not be capable of generating true nonces. If the prover device uses a challenge-less PUF, the random number may contribute little to the formal security and might be omitted. However, in a variety of attack scenarios such as side-channel, fault or related-key attacks, the random number can be highly beneficial.

When the prover device in method step c) and the verifier device in method step d) apply the same conjunction, e.g. a concatenation, which is lossless, i.e. no parts of either the number that can be used just once or the number that can be used just once and the random number are removed, a high degree of security for the authentication of the prover device can be achieved.

In an advantageous option for a secure authentication, a payload value sent from the prover device to the verifier device may be added to the conjunction in method steps c) and d), for example sensor data generated on the prover device which is sent unencrypted to the verifier device.

It is advantageous, when the verifier device generates symbol-specific quantization offset values based on the model containing reliability information for individual PUF responses and/or other data, such as data used in the Two Metric Helper Data Scheme, which are sent to the prover device and applied in method step c) before a quantization step of the PUF, wherein data and/or models revealing information about the PUF response value or inter-symbol information such as error-correcting codes are avoided. In this option, to improve reliability, the verifier device might use its reliability model to generate supportive data that should not leak about the PUF response like symbol-specific quantization offset data and/or other information and send it to the prover device. Such data can increase the efficiency by removing error prone symbols, e.g. in cases where symbols are hard to quantize. Also offsets due to aging or environmental conditions might be used as supportive data. Any kind of error-correcting codes containing inter-symbol information and thus leaking information about the relation of PUF responses should be excluded. The secret response of the PUF may remain fuzzy after this step.

In method step d) more precise likelihood information can also be derived from a PUF by taking in step a) the measured PUF response before quantization. In step d) this reliability information in form of a known or estimated distribution that is stored in the model containing reliability information for individual PUF responses might be used. The model in this case might be for instance given as expectation and variance of a normal distribution under assumption of Gaussian noise. The likelihood is specific for each symbol in the quantized PUF response on the given prover device. Using this modified enrollment strategy, it is avoided to apply the quantization step of the PUF resulting in more precise reliability estimations, and thus in a more effective test of the hypotheses that might lead to an overall improved performance.

In an advantageous embodiment, in method step d) a list of hypotheses is generated, which is a list of words representing multi-symbol PUF responses with a property that the sum over the probabilities of all words is larger than 1 - (false rejection rate), wherein an algorithm for determining the list is configured to run in polynomial runtime, wherein the list is generated in an exact solution or in an approximation. This way, a fast and efficient processing for determining the hypothesis list can be reached. The following pseudocode can be used in an embodiment of the invention for a horizontal generation of hypotheses on binary alphabet:

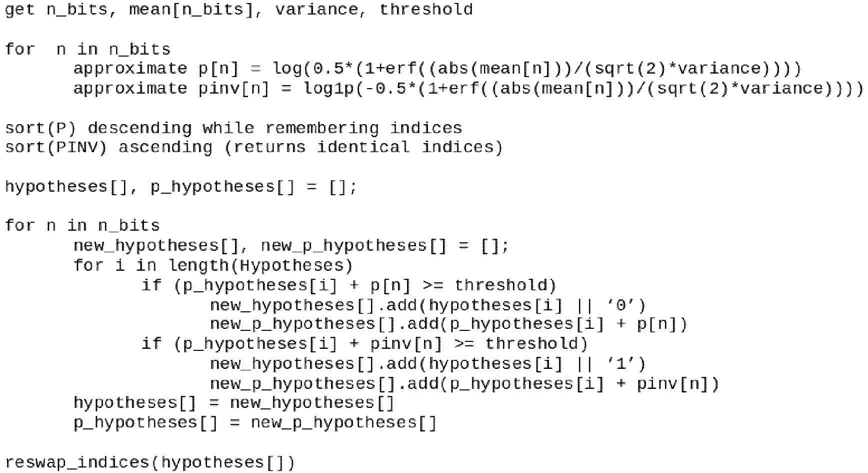

By using log-likelihood, the above algorithm can operate on fixed-point or floating-point types and only requires additions. For the calculation of the precise false rejection rate as the sum over all p_hypotheses [ ], a much higher numerical accuracy may be needed, but this accuracy is not necessary to perform a verification.

Since the binary tree already resembles a search tree, a vertical evaluation would be more interesting for the generation in real-time: The tree can be split into several nodes already containing a prefix, and each subtree feeds one hash pipeline for multi-threading. In the above embodiment, pseudocode is not actual programming language but uses short phrases to write code for programs before the code is created in a specific language.

The likelihood information is used to generate the list of hypotheses which likely contain the actual output of the proving device. To each of the hypotheses the same Hash Function as on the prover side is applied and the hypothetical hash value is compared to the one received from the prover. If one of the outputs match the received response, this hypothesis is true, and the authentication is accepted. If all hypotheses are tested without a match, the authentication is rejected. The consequences of such a rejection are application-specific.

The words of the list of words may be sorted according to their probability in descending order and cut off when a predetermined probability is reached, wherein, e.g. the words that are wrong with a predetermined probability are not contained in the list to limit the number of hypotheses. This way, a fast and efficient processing of those hypotheses that are likely to yield the same output as the output sent from the prover device can be reached.

If the prover device has a PUF with challenge-response behavior, the prover device and the verifier device may apply a challenge conjunction, e.g. a concatenation, after method step b) and before method step c) to derive a challenge for the PUF of the prover device. The challenge may also be used as a seed for a deterministic challenge generation if multiple challenges are needed. An example for such a deterministic function is a Permutation or Hash Function to ensure a good distribution of the challenges over the entire vector space.

Authenticity of the verifier device holding the model containing reliability information for individual PUF responses for authentication of the prover device can be validated by the prover device, when after method step b) and before method step c) the verifier device feeds the model containing reliability information for individual PUF responses with a predetermined challenge to yield a model secret output of the PUF, applies the Cryptographic Hash Function to the conjunction of the model secret output of the PUF and at least the number that can be used just once and sends at least a part of the output of the Cryptographic Hash Function and the predetermined challenge to the prover device, wherein the prover device yields a fuzzy secret output of the PUF by feeding the PUF with the predetermined challenge received from the verifier device, applies the Cryptographic Hash Function to the conjunction of the secret output of the PUF and at least the number that can be used just once, and matches at least a part of the output of the Cryptographic Hash Function applied to the secret output of the PUF against at least the part of the output of the Cryptographic Hash Function received from the verifier device to find a match for a successful authentication.

The secret output of the PUF or a part thereof or a complete secret received after hashing may be used as a key for symmetric encryption between the prover device and the verifier device. This way, the inventive method allows not only for successful authentication but also to derive a shared non-fuzzy secret key between the prover device and the verifier device or any other device holding the model containing reliability information for individual PUF responses. Not only authentication of the prover device but also authentication of a message and exchange of a session key becomes possible this way. If the authentication was successful, the prover device and the verifier device know the secret output of the PUF (and thus the complete output of the hash), wherein the secret output of the PUF is no longer fuzzy for the prover device and the verifier device even though no error correction was used on the prover device. It can now be used as a secret key in conventional symmetric encryption. For example, the Hash Function output might be split into the response for the method steps mentioned above and the session key. This key allows for bidirectional transfer of additional authenticated or confidential data with a low computational complexity. In combination with a Message Authentication Code (MAC), this allows for mutual authentication. As the prover device may not contain a non-volatile key storage, the inventive method may be repeated after a power cycle but can also be run anytime a fresh key shall be used.

The prover device and the verifier device may be integrated in a physical device. The physical device may be a single entity. Here, it could be a useful application for the device to "negotiate" the secret with itself.

If the verifier device aims at sending authenticated data or an authenticated message such as a message comprising a command to the prover device equipped with the PUF, a hypothetical secret response of the PUF may be taken from the model containing reliability information for individual PUF responses by the verifier device and hashed using the Cryptographic Hash Function with the data or message, wherein the prover device tests authenticity by hashing a measured response of the PUF under the challenge, which is received from the verifier device and used by the verifier device to obtain the hypothetical secret response of the PUF, with the data or message using the Cryptographic Hash Function and comparing the resulting hashed output with the hashed output received from the verifier device on the hypothetical PUF response.

In a further advantageous embodiment, the verifier device may send authenticated data, a message or a command to the prover device equipped with the PUF, wherein the verifier device feeds the model containing reliability information for individual PUF responses with a further predetermined challenge to yield a further model secret output of the PUF, applies the Cryptographic Hash Function to the data, message or command, wherein the prover device tests authentication by yielding a further fuzzy secret output of the PUF by feeding the PUF with the further predetermined challenge received from the verifier device and applying the Cryptographic Hash Function to the data, message or command and the further model secret output of the PUF.

Another aspect of the invention is a computer program product comprising instructions which, when the above mentioned method is executed by a computer, cause the computer to execute the method, wherein the computer is preferably a distributed computing system, wherein the prover device is a client and the verifier device is a server, wherein part of the server is preferably located/arranged/operated in a cloud computing system.

The computer program product may be embodied as a computer-readable medium on which the computer program product is stored. The computer program product may be distributed between the client and the server.

The invention also relates to a system for authentication of a prover device containing a Physically Unclonable Function (PUF), in particular for executing the above mentioned method. The system comprises:
- the prover device comprising a first data interface to exchange messages with a verifier device,
- the verifier device comprising a database unit and a second data interface to exchange messages with the prover device,
- a circuit device configured to determine enrollment data of a model containing reliability information for individual PUF responses by reading out a specific response of the PUF of the prover device, e.g. by repeatedly measuring a specific PUF response under different operation conditions, until a predetermined accuracy of the reliability information is reached,
- wherein the database unit of the verifier device is configured to store the enrollment data and the model, which contains reliability information for individual PUF responses, of the prover device known to the verifier device, wherein the verifier device is configured to generate a number that can be used just once (nonce) and to send it to the prover device,
- wherein the prover device is configured to apply a Cryptographic Hash Function to a conjunction of a fuzzy secret output of the PUF and at least the number that can be used just once and to send at least part of an output of the Cryptographic Hash Function to the verifier device,
- wherein the verifier device is configured to determine a symbol-specific likelihood from the model containing reliability information for individual PUF responses to derive a number of hypotheses for the secret output, wherein the hypotheses have different likelihoods and the number depends on a noise level of the PUF, a predetermined false rejection rate and/or a length of the secret output, and wherein the verifier device is configured to apply the Cryptographic Hash Function to the conjunction of every hypothesis for the secret output of the number of hypotheses and at least the number that can be used just once until at least a part of an output of the Cryptographic Hash Function of the verifier device matches at least the part of the output of the Cryptographic Hash Function received from the prover device for a successful authentication.

The inventive system shows the same advantages and effects as those mentioned in connection with the inventive method. When the database unit of the verifier device has stored the enrollment data and the model containing reliability information for individual PUF responses, the circuit device is permanently deactivated, e.g. by blowing a fuse. The prover device may be an RFID tags or an IoT device. The verifier device may be a server, e.g. in the form of a backend server. A data link between the prover device and the verifier device established by the first and second data interfaces, may be wired or wireless.

The prover device may be configured to send an identification code (ID) to the verifier device, wherein the verifier device may be configured to select the enrollment data of the prover device in the database unit. Alternatively, the verifier device may be configured to publish its identification, e.g. its IP address, and to request a response from any prover device which received the request and wants to respond to the verifier device.

The database unit of the verifier device may be configured to store the number that can be used just once, wherein the verifier device is configured to verify that the number that can be used just once is used only once. Verification may occur in the verifier device checks whether a number that can be used just once is listed in the database unit.

Other aspects, features and advantages of the invention will become apparent by the following description of exemplary embodiments alone or in cooperation with the appended figures. Unless otherwise indicated, the same reference signs are used for identical or equivalent elements.
- Fig. 1: is a schematic flowchart of steps of the method according to the invention,
- Fig. 2: shows an implementation of the method according to the invention in an embodiment of the invention,
- Fig. 3: is a graphic representation showing a number of hypotheses for the secret output versus a PUF bit error rate for three different security levels according to embodiments of the invention,
- Fig. 4: is a schematic diagram of a binary tree for obtaining hypotheses for the secret output for a prover device equipped with a PUF with a binary response in a further embodiment of the invention.

Now, exemplary embodiments of the invention are described in further detail.

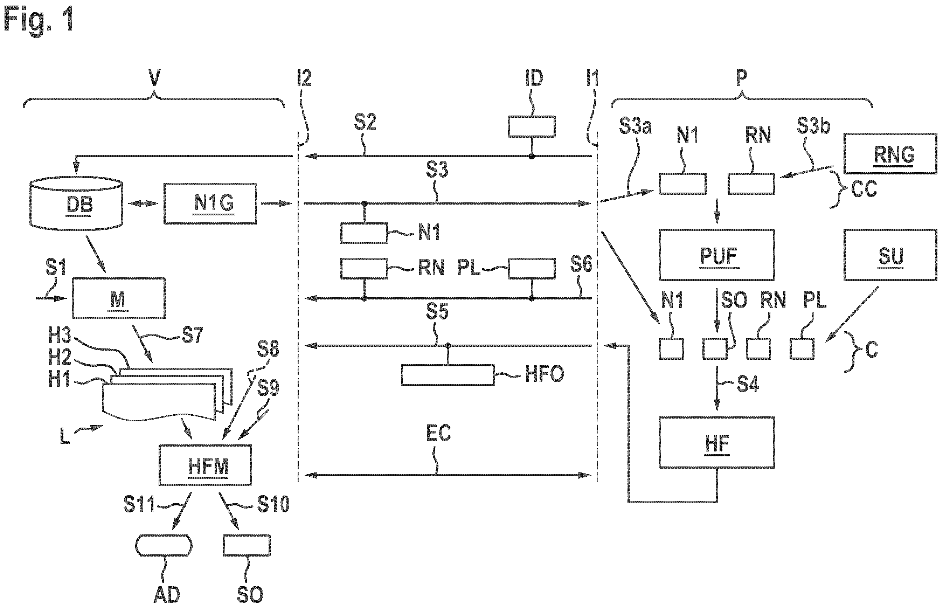

Fig. 1 shows a schematic flowchart of the method steps of the inventive method. In the following, the term "PUF" is used as an abbreviation for a Physically Unclonable Function and as a reference sign for a functional element comprised by a prover device P, the functional element executing the Physically Unclonable Function. Using a circuit device, a trustworthy party, e.g. a manufacturer of the prover device P containing the PUF, may characterize the PUF by reading out several times a response of the PUF. From the responses a model M containing reliability information for the individual PUF responses is created in method step S1. This model M, along with the data of the responses of the PUF as enrollment data, may be transferred to a trustworthy server that acts as a verifier device V. Non-quantized values containing the reliability information like counters are preferred for building the model M as using non-quantized values may speed up the process for building the model M significantly. Nonetheless, the creation of the model M is also possible for PUFs that do not provide non-quantized values containing the reliability information by repeatedly measuring a specific PUF response possibly under different operation conditions such as different temperatures, humidity levels, payloads etc. until a predetermined accuracy of the reliability, which may be regarded as sufficient for the authentication of the prover device P, is reached. After the enrollment, the circuit device to extract the response values directly may be permanently deactivated, e.g. by blowing a fuse of the circuit device.

A phase of authentication and key agreement may be repeated any time an authentication or key shall be agreed upon between the verifier device V and the prover device P. In optional method step S2 the prover device P may send an identification code ID of the prover device P over a first data interface I1 to a second data interface I2 of the verifier device V. The verifier device V may select the enrollment data of the prover device P in a database unit DB. Alternatively, the verifier device V may publish its identification, e.g. its IP address, and request a response over the second data interface I2 from any prover device P which received the request over the first data interface I1 and wants to respond to the verifier device. In method step S3, the verifier device V generates a number N1 that can be used just once by using a generator N1G for generating the number N1 that can be used just once and sends it to the prover device P. Different versions of the number N1 that can be used just once (nonces) may be saved in the database unit DB to track and verify by the verifier device V that each version is indeed only used once.

In method step S3b, the prover device P may generate a random number RN by using a generator RNG for generating the random number RN and may send it to the verifier device V in method step S6. In case the prover device P may not contain sufficient non-volatile memory, it may not capable of generating true nonces. If the proving device P uses a challenge-less PUF, the random number RN may contribute little to the formal security and might be omitted. However, in a variety of attack scenarios such as side-channel, fault or related-key attacks, the random number RN can be highly beneficial for successful authentication meaning that an attack is becoming more difficult and if an attack is possible, the authentication is broken. In method step 4, both sides P and V know the nonce N1 and possibly the random number RN. The prover device P in method step S3a may apply a lossless, i.e. no parts of the nonce N1 or salt when used shall be removed, challenge conjunction function CC, e.g. a concatenation, to derive a challenge from the nonce N1 and the random number RN if a PUF with challenge-response behavior is used. The result of the challenge conjunction function CC might also be used as a seed for a deterministic challenge generation if multiple challenges are needed. An example for such a deterministic function is a Permutation or Hash Function to ensure a distribution of the challenges over the entire vector space.

The prover device P starts a read-out of its Physically Unclonable Function. The verifier device V loads the model M for the prover device P from its database unit DB and, if applicable, applies the challenge, which is the result of the challenge conjunction function CC, to it. Optionally, to improve reliability, the verifier device V might use its model M to generate supportive data that do not leak about the PUF response like symbol-specific or symbol-wise quantization offset data and/or other information and sends it to the prover device P, for example in method step S3. Such data can increase the efficiency of the authentication by removing error prone symbols or making the quantization more robust, e.g., in cases where specific measurements of the PUF response tend to lead to a high error probability of the symbols. An example is the data used in the Two Metric Helper Data Scheme. Also offsets due to aging or environmental conditions might be accounted as supportive data. Any kind of error-correcting codes containing inter-symbol information and thus leaking information about the relation of PUF responses may be excluded. The secret output SO of the PUF remains fuzzy after this step.

In method step S4, the prover device takes the quantized fuzzy secret output SO of its Physically Unclonable Function and conjuncts it with the nonce N1, and the optional random number RN (respectively, the challenge resulting from step S3a) by using the conjunction function C. Optionally, a payload PL might be added, for example sensor data generated by a sensor unit SU of the prover device P. Then, a Cryptographic Hash Function HF is applied to the conjunct word by the prover device P. The hash function should not be reversible with a lower complexity than brute-force even in case the relation between inputs is known, and should offer enough diffusion that no statistical assumption of the input can be made. Examples for a suitable functions include but are not limited to NIST SHA-3, or the more lightweight NIST-finalist ASCON-XOF. At the end of this step, the output HFO of the hash function HF is sent in method step S5 to the verifier device V. If a payload PL has been added, this may be sent in plaintext as well, so the payload PL at this point is not encrypted but authenticity will be verified below.

In method step S7, the verifier device V may obtain an estimate for the measurements of the PUF from its model M. The verifier device V may apply the lossless, i.e. no parts of the nonce N1 or salt when used shall be removed, challenge conjunction function CC, e.g. a concatenation, to derive the challenge from the nonce N1 and the random number RN if a PUF with challenge-response behavior is used, as has been used by the prover device (P) in method step S3a. The verifier device V may then apply the same conjunction C of nonce N1 and optional random number RN including the challenge if applicable (see method step S3a above) and combine it optionally with the payload PL in method step S8 in the same way as it has been done in the prover device P in method step S4. Unlike other authentication methods in the prior art, the inventive method does not only derive quantized responses from the PUF to compare with. Instead, reliability information given by the model M, e.g., as noise-variance information and expected measurement result of the PUF before quantization, may be used on top to estimate the likelihood of the symbols after the quantization in the device. This likelihood is individual for each symbol on each prover device. The likelihood information may then be used to generate a list L of hypotheses H1, H2, H3 which likely contain the actual secret output SO of the proving device P. To each of the hypotheses H1, H2, H3 the same Hash Function HF as on the prover device P is applied and the resulting hypothetical hash value output is compared in method step S9 to the output HFO of the hash function HF received from the prover device P in method step S5. If one of the hypothetical hash value outputs matches the received hash function HF output HFO, this hypothesis H1; H2; H3 is true, and the authentication is accepted in method step S10. If all hypotheses H1, H2, H3 are tested without a match in a Hash Function Matching unit HFM, the authentication is rejected in method step S11. A message AD that the authentication is denied may be sent from the verifier device V to the prover device P. The consequences of such a rejection may be application-specific on the side of the prover device P.

The use of likelihood information provides significant improvement in accuracy compared to the commonly used Hamming Distance model assuming identical likelihood. With the inventive method, it is possible for realistic error rates to find - given an expectation from the model M and the hash value output HFO that includes the noisy PUF response - reasonable candidates in form of hypotheses H1, H2, H3 in the verifier device V for the PUF response SO generated by the prover device P in sufficiently short time. Using in contrast, e.g., a Hamming Distance metric would mean that an exponential number of candidates/hypotheses H1, H2, H3 has to be enumerated in order to find the fuzzy PUF response SO from the expected input and the prover device's hash tag on the verifier device.

If the authentication was successful, both sides P, V know the secret output SO of the PUF, it is no longer fuzzy for prover device P and the verifier device V even though no error correction was used on the either device. It can now be used as a secret key SK in conventional symmetric encryption. For example, the Hash Function output HFO might be split into the response for the previous steps S7 to S10 and the session key SK. This key allows for bidirectional transfer in an encrypted channel EC of additional authenticated or confidential data with a lower computational complexity. In combination with a Message Authentication Code (MAC), this allows for mutual authentication. As the proving device P may not contain a non-volatile key storage unit, the method is to be repeated after a power cycle but can also be run anytime a fresh key SK shall be used.

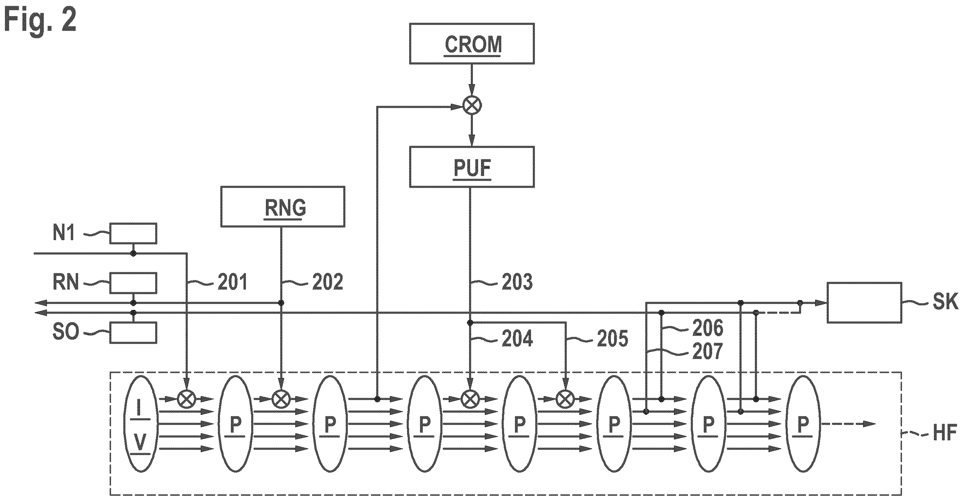

Fig. 2 shows an implementation of the method according to the invention in an embodiment thereof using a sponge-based hash function HF. Executing the hash function ASCON-XOF from left to right, an initialization vector IV is fed with a nonce N1 of a value of 64 bit in step 201 for a first permutation function P. In step 202, the random number generator RNG provides the random number RN to the hash function HF after the first permutation function P. Data from a Challenge Read-Only Memory unit CROM is fed into the conjunction C with the nonce N1 and the random number RN and fed to a PUF-unit PUF. The required number of challenges (e.g. 80, 128, ...) is deterministically derived from a randomized seed value (output to the permutation function P) that depends on N1 and RN. The source can be a ROM but other sources such as a register may be used. The Ring Oscillator Physical Unclonable Function (RO PUF) unit provides a secret output SO of the response of the PUF of a value of 80 bit with 5% BER (Bit Error Rare which is the number of bit errors per PUF readout) to HF in step 203 which is fed to two permutation functions in shares of 40 bit in steps 204, 205. After application of another permutation SO is hashed with N1, RN, IV and the session key SK and HFO can be extracted. This is done in step 206 and 207 by the squeezing procedure of HF; in each round 32 bit of the hash function output HFO and the session key SK are collected.

In this embodiment, the false rejection rate is 5 x 10⁻⁶ leading to a false acceptance rate: 1:2⁵⁶ = 1.4 x 10⁻¹⁷. A Number of acceptance hypotheses is 12 x 10⁶ leading to a worst-case verification time: 50 ms at 225M Hashes/s in a one fully unrolled FPGA pipeline (FPGA: Field Programmable Gate Array). If a Hamming Distance 14 would be used for comparison, this would have required approximately 2⁵¹ Hypotheses leading to false rejection rate of 9 x 10⁻⁶ and False acceptance rate of 1.9 x 10⁻⁹.

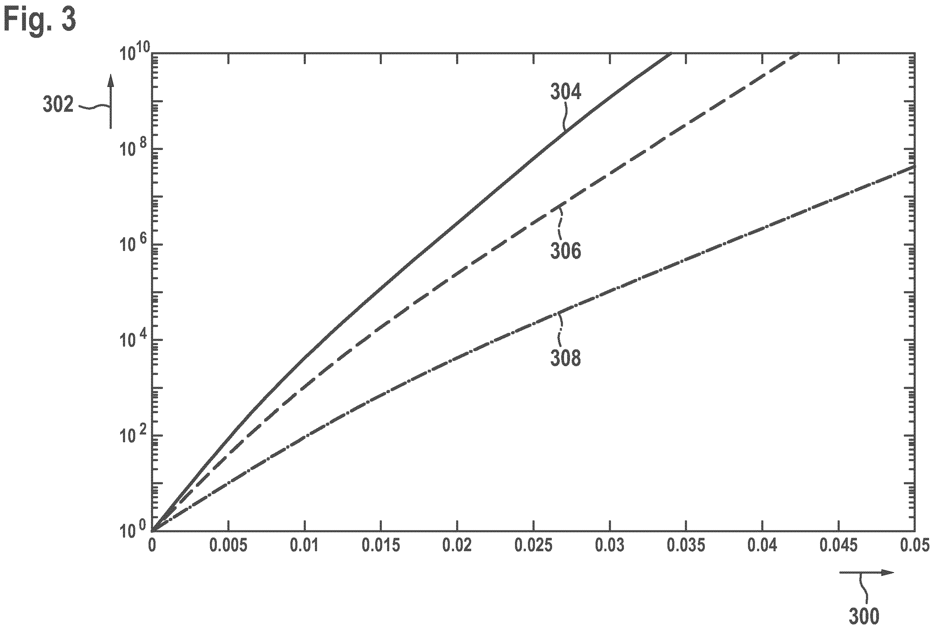

Fig. 3 is a graphic representation showing a number of hypotheses 302 for the secret output versus a PUF bit error rate 300 for three different security levels and a false rejection rate of 10⁻⁶ according to embodiments of the invention. The continuous line 304 describes a security level of a secret output value of the PUF of 160 bit. For a binary output PUF, the 160 bit secret output may be a sequence of PUF responses such that it may be a 160 digit sequence of 0 and 1. The dashed line 306 describes a security level of a secret output value of the PUF of 128 bit. The dashed-dotted line 308 describes a security level of a secret output value of the PUF of 80 bit. Here, the reliability model M is a model describing the statistical uncertainty inherent to the measurement of the physical property used to generate a PUF response, which in the simplest case may be a normal distribution of the observed property or a more complex distribution from, e.g. a semiconductor model. It can be a mathematical description or a model trained to describing the impact of noise and environmental conditions on the PUF. The model M may provide the probability that a symbol derived as PUF response deviates from its expectation. The number of candidate responses 302 may depend on a noise level of the PUF, a predetermined false rejection rate and the length of the secret, e.g. 80 bit, 128 bit or 160 bit.

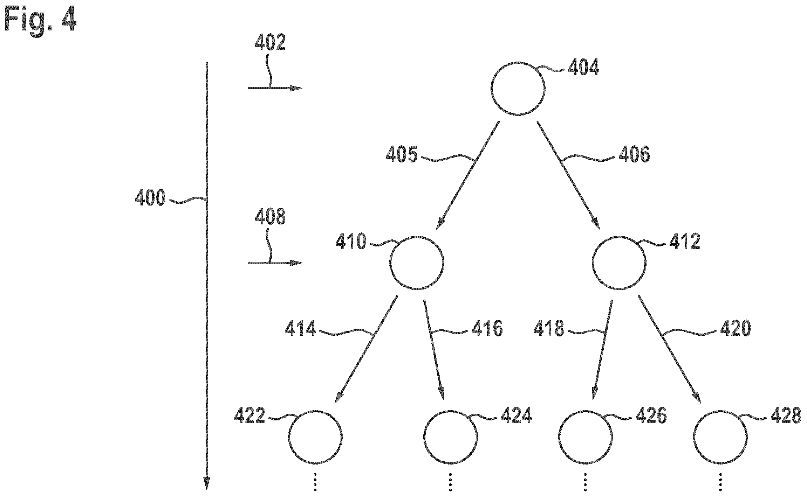

Fig. 4 is a schematic diagram of a binary tree for obtaining hypotheses H1, H2, H3 for the secret output for a prover device equipped with a PUF with a binary response in a further embodiment of the invention. A list of hypothetic response sequences containing the correct response sequence with high probability for e.g. PUFs with binary response can be obtained as follows: 1. From root towards leaf nodes branching is realized with increasing reliability of the symbols. 2. Pruning of a path takes place if the probability for the corresponding sequence falls below a threshold. At this point all remaining words might be taken as hypothetical response sequences. Alternatively, 3. for the remaining words (all cases where the leaf node is included), the likelihood is computed and the hypothetical list can be sorted in descending order of the likelihood. In the figure every level 402, 408 corresponds to a selected position in the response sequence. It is sorted by increasing reliability from root to leaf node 400. A node 404, 410, 412, 422, 424, 426, 428 corresponds to the probability of a subsequence selected so far; e.g., the root node 404 represents all possible strings and thus likelihood P=1; the first level 410, 412 represents the two sequences with the least reliable symbol set to 0 and, respectively, 1. Every edge 405, 406, 414, 416, 418, 420 corresponds to the selection of a specific symbol 0/1 for a position. An algorithm like the one shown in Fig. 4 may be used to enumerate the list L in practical time, as it would be computationally extremely difficult to just loop through all secret words and calculate their probabilities directly.

The inventive method provides machine-learning resistant PUF-based authentication and key exchange without error correction on the PUF response of the prover device. It is much more secure than existing authentication methods for challenge-response authentication with PUFs. The overhead on the prover device P is only a hash function, so that the inventive method is also more lightweight in terms of required data transmission/storage when compared to authentication methods requiring error correction. The calculation effort is predominantly at the side of the verifier device V, which may be implemented as a server, which usually in the state of the art has sufficient computational power. This makes the inventive method and the inventive system applicable to in particular to lightweight applications in the IoT, for medical applications, or related fields, where developed solutions must provide a high level of security at low costs.

A technical feature or several technical features which has/have been disclosed with respect to a singular or several embodiments disclosed herein before may be present also in another embodiment except it is/they are specified not to be present or it is impossible for it/them to be present for technical reasons.

## Claims

1. Computer implemented method for authentication of a prover device (P) containing a Physically Unclonable Function (PUF), the method comprising the steps:
a) determining (S1) enrollment data of a model (M) containing reliability information for individual PUF responses by reading out a specific response of the PUF of the prover device (P), e.g. by repeatedly measuring a specific PUF response under different operation conditions, until a predetermined accuracy of the reliability information is reached, and storing the enrollment data and the model (M), which contains reliability information for individual PUF responses, of the prover device (P) known to a verifier device (V) in a database unit (DB) of the verifier device (V),
b) the verifier device (V) generates a number (N1) that can be used just once and sends (S3) it to the prover device (P),
c) the prover device (P) applies (S4) a Cryptographic Hash Function (HF) to a conjunction (C) of a fuzzy secret output (SO) of the PUF and at least the number (N1) that can be used just once and sends (S5) at least a part of an output (HFO) of the Cryptographic Hash Function (HF) to the verifier device (V),
d) the verifier device (V) determines (S7) a symbol-specific likelihood from the model (M) containing reliability information for individual PUF responses to derive a number of hypotheses (H1, H2, H3) for the secret output, wherein the hypotheses (H1, H2, H3) have different likelihoods and the number depends on a noise level of the PUF, a predetermined false rejection rate and/or a length of the secret output (SO), and the verifier device (V) applies the Cryptographic Hash Function (HF) to the conjunction (C) of every hypothesis (H1; H2; H3) for the secret output of the number of hypotheses (H1, H2, H3) and at least the number (N1) that can be used just once until at least a part of an output of the Cryptographic Hash Function (HF) of the verifier device (V) matches (S9) at least the part of the output (HFO) of the Cryptographic Hash Function (HF) received from the prover device (P) for a successful authentication.

2. Computer implemented method of claim 1, wherein after method step b) and before method step c) the prover device (P) generates a random number (RN) and sends (S6) the random number (RN) to the verifier device (V) in method step c1), wherein in method steps c) and d) the Cryptographic Hash Function (HF) is applied to the conjunction comprising the number (N1) that can be used just once and the random number (RN).

3. Computer implemented method of claim 1 or claim 2, wherein the prover device (P) in method step c) and the verifier device (V) in method step d) apply the same conjunction (C), e.g. a concatenation, which is lossless, i.e. no parts of either the number (N1) that can be used just once or the number (N1) that can be used just once and the random number (RN) are removed.

4. Computer implemented method of any of the preceding claims, wherein a payload value (PL) sent (S6) from the prover device (P) to the verifier device (V) is added to the conjunction (C)) in method steps c) and d), for example sensor data generated on the prover device (P) which is sent unencrypted to the verifier device (V).

5. Computer implemented method of any of the preceding claims, wherein the verifier device (V) generates symbol-specific quantization offset values based on the model (M) containing reliability information for individual PUF responses and/or other data, such as data used in the Two Metric Helper Data Scheme, which are sent to the prover device (P) and applied in method step c) before a quantization step of the PUF, wherein data and/or models revealing information about the PUF response value or inter-symbol information such as error-correcting codes are avoided.

6. Computer implemented method of any of the preceding claims, wherein in method step d) likelihood information is used from measured PUF responses before quantization using reliability information in form of a known or estimated distribution that is stored in the model (M)..

7. Computer implemented method of any of the preceding claims, wherein in method step d) a list (L) of hypotheses (H1, H2, H3) is generated, which is a list of words representing multi-symbol PUF responses with a property that the sum over the probabilities of all words is larger than 1 - (false rejection rate), wherein an algorithm for determining the list (L) is configured to run in polynomial runtime, wherein the list (L) is generated in an exact solution or in an approximation.

8. Computer implemented method of claim 7, wherein the words are sorted according to their probability and cut off when a predetermined probability is reached, wherein e.g. the words that are wrong with a predetermined probability are not contained in the list (L) to limit the number of hypotheses (H1, H2, H3).

9. Computer implemented method of any of the preceding claims, wherein the prover device (P) and the verifier device (V) apply a challenge conjunction (CC), e.g. a concatenation, after method step b) and before method step c) to derive a challenge if the prover device (P) has a PUF with challenge-response behavior.

10. Computer implemented method of any of the preceding claims, wherein after method step b) and before method step c) the verifier device (V) feeds the model (M) containing reliability information for individual PUF responses with a predetermined challenge to yield a model secret output of the PUF, applies the Cryptographic Hash Function (HF) to the conjunction (C) of the model secret output of the PUF and at least the number that can be used just once and sends at least a part of the output of the Cryptographic Hash Function (HF) and the predetermined challenge to the prover device (P), wherein the prover device (P) yields a fuzzy secret output of the PUF by feeding the PUF with the predetermined challenge received from the verifier device (V), applies the Cryptographic Hash Function (HF) to the conjunction (C) of the secret output of the PUF and at least the number (N1) that can be used just once, and matches at least a part of the output of the Cryptographic Hash Function (HF) applied to the secret output of the PUF against at least the part of the output of the Cryptographic Hash Function (HF) received from the verifier device (V) to find a match for a successful authentication.

11. Computer implemented method of any of the preceding claims, wherein a part or a complete output of the hash function (HFO) or the secret output (SO) of the PUF is used as a key (SK) for symmetric encryption between the prover device (P) and the verifier device (V).

12. Computer implemented method of any of the preceding claims, wherein the prover device (P) and the verifier device (V) are integrated in a physical device.

13. Computer program product comprising instructions which, when the method according to any of claims 1 to 12 is executed by a computer, cause the computer to execute the method according to any of claims 1 to 12, wherein the computer is e.g. a distributed computing system, wherein the prover device (P) is a client and the verifier device (V) is a server, wherein part of the server is e.g. located in a cloud computing system.

14. Computer-readable medium on which the computer program product according to the preceding claim is stored.

15. System for authentication of a prover device (P) containing a Physically Unclonable Function (PUF), in particular for executing the method of any of claims 1 to 12, wherein the system comprises:
- the prover device (P) comprising a first data interface (11) to exchange messages with a verifier device (V),
- the verifier device (V) comprising a database unit (DB) and a second data interface (I2) to exchange messages with the prover device (P),
- a circuit device configured to determine enrollment data of a model (M) containing reliability information for individual PUF responses by reading out a specific response of the PUF of the prover device (P), e.g. by repeatedly measuring a specific PUF response under different operation conditions, until a predetermined accuracy of the reliability information is reached,
- wherein the database unit (DB) of the verifier device (V) is configured to store the enrollment data and the model (M), which contains reliability information for individual PUF responses, of the prover device (P) known to the verifier device (V), wherein the verifier device (V) is configured to generate a number (N1) that can be used just once and to send it to the prover device (P),
- wherein the prover device (P) is configured to apply a Cryptographic Hash Function (HF) to a conjunction (C) of a fuzzy secret output (SO) of the PUF and at least the number (N1) that can be used just once and to send at least part of an output (HFO) of the Cryptographic Hash Function (HF) to the verifier device (V),
- wherein the verifier device (V) is configured to determine a symbol-specific likelihood from the model (M) containing reliability information for individual PUF responses to derive a number of hypotheses (H1, H2, H3) for the secret output, wherein the hypotheses (H1, H2, H3) have different likelihoods and the number depends on a noise level of the PUF, a predetermined false rejection rate and/or a length of the secret output (SO), and wherein the verifier device (V) is configured to apply the Cryptographic Hash Function (HF) to the conjunction (C) of every hypothesis (H1; H2; H3) for the secret output of the number of hypotheses (H1, H2, H3) and at least the number (N1) that can be used just once until at least a part of an output of the Cryptographic Hash Function (HF) of the verifier device (V) matches at least the part of the output (HFO) of the Cryptographic Hash Function (HF) received from the prover device (P) for a successful authentication.
